# EUROPÄISCHE PATENTANMELDUNG

(11) **EP 1 254 760 A1**
(43) Veröffentlichungstag der Anmeldung: **06.11.2002**
(21) Anmeldenummer: 01110655.6
(22) Anmeldetag: 02.05.2001
(51) Int. Cl.: B29C 65/16

(54) **Verfahren zum Laser-Durchstrahlschweissen von Kunststoffen und Laser-Durchstrahlschweissvorrichtung**

(71) Anmelder: BLZ Bayerisches Laserzentrum Gemeinnützige Forschungsgesellschaft mbH, 91058 Erlangen (DE)
(72) Erfinder: Eitner, Udo, 90607 Rückersdorf (DE); Hierl, Stefan, 92348 Berg (DE); Geiger, Manfred, Prof. Dr.-Ing., 91341 Röttenbach (DE)
(74) Vertreter: Hübner, Gerd, Dipl.-Phys.

(57) **Zusammenfassung**

Ein Verfahren zum Laser-Durchstrahlschweißen von Kunststoffen weist folgende Verfahrensschritten auf:
- Positionieren zweier zu verschweißender Lagen (1, 2) aus unterschiedlichen Kunststoffmaterialien, von denen eines für die zum Verschweißen eingesetzte Laserstrahlung (7) transmissiv ist und von denen das zweite ein hohes Absorptionsvermögen für diese Laserstrahlung (7) aufweist, und
- Einstrahlen der Laserstrahlung (7) in den Grenzbereich (8) zwischen den beiden Lagen (1, 2) durch die transmissive Lage (2) hindurch derart, das die absorbierende Lage (1) durch Absorption der Laserstrahlung (7) lokal aufschmilzt und für eine Verschmelzung der beiden Lagen (1, 2) sorgt, wobei die transmissive Lage (1) während der Beaufschlagung durch die Laserstrahlung (7) an ihrer Oberfläche (14) zumindest in der Eintrittszone (12) der Laserstrahlung (7) durch einen Gasstrom (13) gekühlt wird, um Verbrennungen an der Oberseite der Lage (2) zu verhindern.

## Beschreibung

Die Erfindung betrifft ein Verfahren zum Laser-Durchstrahlschweißen von Kunststoffen mit den im Oberbegriff des Anspruches 1 angegebenen Verfahrensschritten sowie eine Laser-Durchstrahlschweißvorrichtung zur Durchführung dieses Verfahrens mit den im Oberbegriff des Anspruches 8 angegebenen Merkmalen.

Bevor auf die eigentliche Problemstellung bei der vorliegenden Erfindung eingegangen wird, soll kurz der Hintergrund des Laser-Durchstrahlschweißens erläutert werden. So weisen die meisten Thermoplaste, sofern sie nicht mit absorbierenden Füllstoffen versehen sind, eine hohe Transparenz für bestimmte Laser-Wellenlängen, wie z. B. die Wellenlänge von Hochleistungs-Diodenlasern (λ = 790 nm bis 980 nm) und Nd:YAG-Lasern (λ = 1064 nm) auf. Dies ermöglicht das Durchstrahlschweißen von thermoplastischen Kunststoffen. Dabei wird ein für die Strahlung des Lasers transmissives Teil auf ein weiteres, mit absorbierenden Stoffen gefülltes Kunststoffteil gelegt und durch Einstrahlung von Laserstrahlung verschweißt. Diese dringt durch die obere transmissive Decklage hindurch und trifft auf das untere, absorbierende Kunststoffteil. Letzteres schmilzt oberflächlich auf, die dadurch gebildete Schmelze dehnt sich aus und benetzt den obenliegenden Fügepartner. Durch Wärmeleitung und -strahlung wird die transmissive Lage ebenfalls aufgeschmolzen. Es kommt zu thermischen Platzwechselvorgängen der Molekülketten im Grenzbereich zwischen den beiden Lagen und somit zur Ausbildung einer Schweißverbindung. Eine Schweißnaht kann dabei durch die Relativbewegung des Laserstrahls zum Werkstück erzeugt werden.

Die grundsätzlichen Vorteile des Laser-Durchstrahlschweißens von thermoplastischen Kunststoffen liegen in der hohen Prozeßgeschwindigkeit, da die zum Aufschmelzen der Fügepartner benötigte Energie mit Lichtgeschwindigkeit an die Fügestelle transportiert wird. Dabei wird nur ein geringes Schmelzevolumen erzeugt, was einen geringen Verzug der Fügepartner mit sich bringt. Letztere werden ferner nur durch den Anpreßdruck einer entsprechenden Werkstückaufnahme mechanisch beansprucht. Ferner findet kein Schmelzeaustrieb durch eine Relativbewegung der Fügepartner statt. Insbesondere mit dem Hochleistungs-Diodenlaser steht eine kompakte und kostengünstige Laserstrahlquelle zur Verfügung, was geringe Betriebs- und Wartungskosten mit sich bringt.

Ein Nachteil beim Laser-Durchstrahlschweißen liegt in der geringen Maximal-Höhe der überbrückbaren Fügespalte zwischen den beiden Fügepartnern. Dies liegt zum einen daran, daß das Aufschmelzen des transmissiven Fügepartners indirekt über den zweiten Fügepartner erfolgt. Der Wärmeübergang zwischen diesen beiden Teilen verschlechtert sich jedoch drastisch mit Auftreten eines Fügespaltes. Zum anderen wird bei diesem Verfahren grundsätzlich nur ein kleines Schmelzevolumen erzeugt, so daß eine geringe Schmelzeexpansion auftritt. Aus diesem Grunde können also nur schmale Spalte überbrückt werden.

Aus den vorstehenden Gründen ist beim Laser-Durchstrahlschweißen eine aufwendige Spanntechnik für die zu fügenden Teile erforderlich, um über die gesamte Schweißkontur einen Fügespalt sicherzustellen, der kleiner ist als eine vorgegebene Toleranzgrenze.

Vordergründig ist zur Lösung der vorstehenden Problematik daran zu denken, die Streckenenergie beim Laserstrahlschweißen - also die pro Vorschublänge eingestrahlte Energie - zu erhöhen, wodurch sich das Schmelzevolumen und die Schmelzeexpansion in der Schweißnaht erhöhen würde. Damit könnten größere Spalte überbrückt werden. Problem dabei sind jedoch die steigende Gefahr der Überhitzung der Schmelze und das Auftreten von Verbrennungen an der Oberseite des transmissiven Fügepartners.

Die vorstehende Problematik ist insbesondere bei Kunststoffen mit relativ schlechten Transmissionseigenschaften hochrelevant, wie z. B. bei Polybutylenterephthalat (= PBT). Bei diesem Kunststoffmaterial wird auch im ungefüllten Zustand nur ein geringer Teil der Laserstrahlung transmittiert. Beim Durchstrahlschweißen muß deshalb mit hohen Streckenenergien gearbeitet werden und deshalb ist hier die Gefahr der oberflächlichen Verbrennungen sehr groß. Dies ist während des Abfahrens der Schweißkontur sporadisch durch kurze Blitzerscheinungen an der Oberfläche zu erkennen. Mit zunehmender Streckenenergie erhöht sich die Häufigkeit dieser Blitzerscheinungen, bis bei weiterer Erhöhung der Streckenenergie teilweise Verbrennungen auftreten, die sich auch über eine längere Strecke hinwegerstrecken können. In diesen Zonen kann an der Grenzschicht zwischen den beiden Fügepartnern keine Verschweißung erreicht werden.

Verschärft wird das Problem der Überhitzung und Verbrennung der Fügepartner noch durch spezielle Lagen der Schweißnaht. Wird beispielsweise entlang einer Kante der transmissiven Decklage geschweißt, so entsteht ein Hitzestau, da an den Kanten die in der Decklage entstehende Wärme nur zu einer Seite hin abfließen kann.

Zusammenfassend wird durch die geschilderten Verbrennungserscheinungen das Prozeßfenster für das Verschweißen kritischer Kunststoffinaterialien, wie z. B. PBT, in bestimmten Fällen so stark eingeschränkt, daß eine zuverlässige Verschweißung im Durchstrahlverfahren nicht möglich ist.

Zur Lösung dieser Problematik schlägt die Erfindung nun in verfahrenstechnischer Hinsicht vor, daß die transmissive Lage während der Beaufschlagung durch die Laserstrahlung an ihrer Oberfläche zumindest in der Eintrittszone der Laserstrahlung durch einen Gasstrom gekühlt wird. Durch diese Oberflächenkühlung werden Verbrennungen an der Oberfläche der transparenten Decklage verhindert, da die Entzündtemperatur auch dann nicht erreicht wird, wenn mit vergleichsweise hohen Streckenenergien geschweißt wird. Das Prozeßfenster für die Laserstrahlenergie beim Durchstrahlschweißen vergrößert sich damit erheblich.

In vorrichtungstechnischer Hinsicht ist gemäß der Erfindung eine zur Eintrittszone der Laserstrahlung in die Decklage hin gerichtete Zuführungsdüse für einen Kühl-Gasstrom vorgesehen.

Bevorzugte Ausführungsformen der Erfindung in verfahrens- und vorrichtungstechnischer Hinsicht sind in den Unteransprüchen angegeben. Weitere Merkmale, Einzelheiten und Vorteile der Erfindung ergeben sich ferner aus der nachfolgenden Beschreibung, in der Ausführungsbeispiele einer Laser-Durchstrahlschweißvorrichtung gemäß der Erfindung anhand der beigefügten Zeichnungen näher erläutert werden. Es zeigen:
- Fig. 1: eine schematische Seitenansicht einer Laser-Durchstrahlschweißvorrichtung in einer ersten Ausführungsform, und
- Fig. 2: eine Ansicht einer Durchstrahlschweißvorrichtung analog Fig. 1 in einer zweiten Ausführungsform.

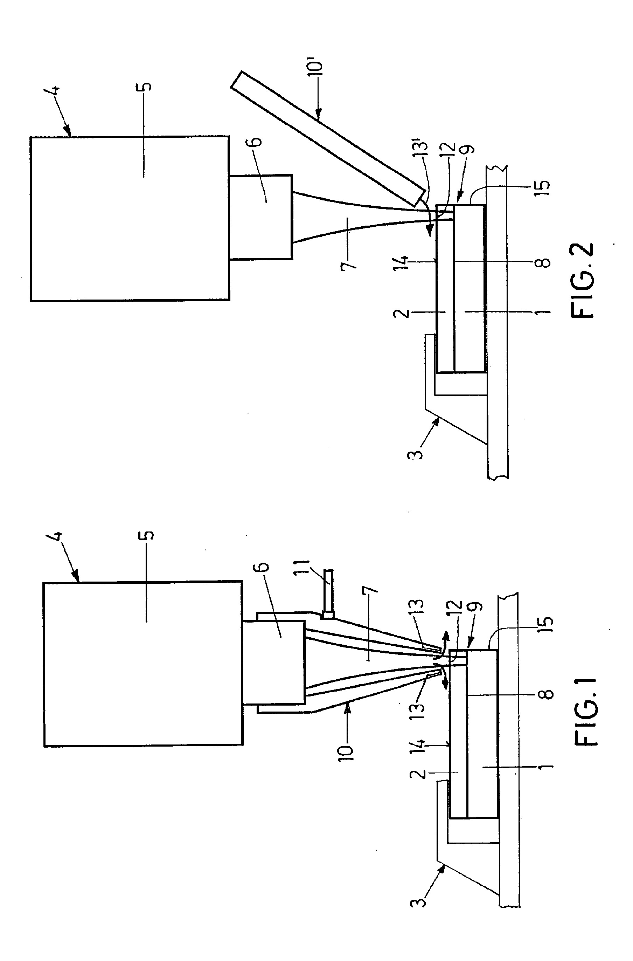

In Fig. 1 sind mit den Bezugszeichen 1 und 2 jeweils zwei Kunststofflagen im Querschnitt angedeutet, die entlang einer Schweißnaht miteinander zu verschweißen sind. Die untere Kunststofflage 1 besteht beispielsweise aus schwarz eingefärbtem PBT-GF30-Kunststoffmaterial. Die obere Decklage 2 ist z. B. PBT-GF30 ohne Füllstoff in einer Dicke von etwa 1 mm. Diese beiden Fügepartner sind in einer nur höchst schematisch dargestellten Werkstückaufnahme 3 eingespannt.

Zur Herstellung einer Schweißnaht ist ein Laserschweißkopf 4 vorgesehen, der oberhalb der Kunststofflagen 1, 2 an einem nicht näher dargestellten, CNC-gesteuerten Manipulationsarm angebracht ist. Der Schweißkopf 4 weist eine Laserstrahlquelle 5 in Form eines Hochleistungs-Diodenlasers auf, dessen Wellenlänge in dem in der Beschreibungseinleitung angegebenen Bereich liegt. Statt der direkten Anordnung der Laserstrahlquelle 5 im Laserschweißkopf 4 kann die Laserstrahlung auch über geeignete Lichtleiterkabel von einer stationär angeordneten Laserquelle herangeführt werden.

Im vorliegenden Fall ist die Laserstrahlquelle 5 in üblicher Weise mit einer vorgesetzten Fokussieroptik 6 versehen, die der Strahlführung und Fokussierung des Laserstrahls 7 dient. Dieser tritt von oben in die obere Kunststofflage 2 ein (Eintrittszone 12) und läuft aufgrund der transmissiven Eigenschaften dieser Decklage bis zur absorbierenden unteren Kunststofflage 1. Dort wird der fokussierte Laserstrahl 7 absorbiert und sorgt für ein lokales Aufschmelzen der unteren Kunststofflage 1 sowie - durch Wärmeleitung und -strahlung - auch der oberen Kunststofflage 2. In der Grenzschicht 8 zwischen den beiden Lagen 1, 2 bildet sich also eine lokale Schmelze, die nach dem Abkühlen zu einer Verschweißung der beiden Lagen 1, 2 führt.

In Fig. 1 ist nun eine Sondersituation dargestellt, wobei nämlich die beiden Kunststofflagen 1, 2 im Bereich einer Randkante 9 miteinander verschweißt werden sollen. Hierbei bestehen besondere Probleme bezüglich der Empfindlichkeit der oberen Kunststofflage 2 gegen Verbrennungserscheinungen. Um diesen vorzubeugen, weist die Laser-Durchstrahlschweißvorrichtung eine Zuführungsdüse 10 für ein Gas auf, die konzentrisch zum Laserstrahl 7 vor der Fokussieroptik 6 angebracht ist. Über einen seitlichen Anschlußstutzen 11 kann in diese Zuführungsdüse 10 Druckluft eingeblasen werden, so daß das ein auf die Eintrittszone 12 des Laserstrahls 7 in die obere Kunststofflage 2 gerichtete Gasstrom 13 aus der Zuführungsdüse 10 austritt. Dieser kühlt die Oberfläche der oberen Kunststofflage 2 so, daß die beiden Kunststofflagen 1, 2 unproblematisch miteinander verschweißt werden können. Die mittlere Streckenenergiedichte der eingestrahlten Laserstrahlung kann dabei auf bis zu 370 J/cm² erhöht werden, ohne daß Verbrennungen an der Oberfläche 14 der oberen Kunststofflage 2 auftreten. Der Druck der den Gasstrom 13 erzeugenden Druckluftquelle kann im Bereich von 2 bis 20 bar liegen. Geeignete Öffnungsdurchmesser für die Zuführungsdüse 10 liegen zwischen 1 und 10 mm, der Abstand zur Oberfläche 14 beträgt vorzugsweise 1 bis 20 mm. Aufgrund der direkten Anbringung der Zuführungsdüse 10 am Laserschweißkopf 4 erfolgt automatisch eine synchrone Bewegung der Zuführungsdüse 10 und des Laserstrahls 7, so daß jederzeit gewährleistet ist, daß die Eintrittszone 12 gekühlt wird.

Die in Fig. 2 gezeigte Ausführungsform der Laser-Durchstrahlschweißvorrichtung unterscheidet sich von der gemäß Fig. 1 lediglich in der Ausbildung der Zuführungsdüse 10'. Alle anderen Bauteile stimmen überein und sind mit identischen Bezugszeichen versehen. Eine nochmalige Erörterung derselben erübrigt sich daher.

Der kühlende Gasstrom 13' bei der Ausführungsform gemäß Fig. 2 wird nun durch eine seitlich schräg herangeführte Zuführungsdüse 10' erzeugt. Die oben erörterten Parameter für Gasdruck, Öffnungsdurchmesser und Abstand der Gasaustrittsöffnung der Zuführungsdüse 10 zur Oberfläche 14 der oberen Kunststofflage 2 können aus dem Beispiel zu Fig. 1 übernommen werden. In Fig. 2 ist im übrigen eine von der Außenseite 15 der Randkante 9 her stattfindende Heranführung des Gasstroms 13' gezeigt. Der Zuführungsstutzen 10' kann jedoch auch bezüglich der rechtwinklig zur Zeichnungsebene von Fig. 2 stehenden Vorschubrichtung des Laserstrahls 7 schleppend - also schräg von vorn - oder stechend - also schräg von hinten - angeordnet sein.

Statt Druckluft kann auch ein inertes Gas oder Schutzgas, wie Argon oder Stickstoff, für den Kühl-Gasstrom 13, 13' verwendet werden.

## Patentansprüche

1. Verfahren zum Laser-Durchstrahlschweißen von Kunststoffen mit folgenden Verfahrensschritten:
- Positionieren zweier zu verschweißender Lagen (1, 2) aus unterschiedlichen Kunststoffmaterialien, von denen eines für die zum Verschweißen eingesetzte Laserstrahlung (7) transmissiv ist und von denen das zweite ein hohes Absorptionsvermögen für diese Laserstrahlung (7) aufweist, und
- Einstrahlen der Laserstrahlung (7) in den Grenzbereich (8) zwischen den beiden Lagen (1, 2) durch die transmissive Lage (2) hindurch derart, das die absorbierende Lage (1) durch Absorption der Laserstrahlung (7) lokal aufschmilzt und für eine Verschmelzung der beiden Lagen (1, 2) sorgt,
**dadurch gekennzeichnet, daß**
die transmissive Lage (2) während der Beaufschlagung durch die Laserstrahlung (7) an ihrer Oberfläche (14) zumindest in der Eintrittszone (12) der Laserstrahlung (7) durch einen Gasstrom (13, 13') gekühlt wird.

2. Verfahren nach Anspruch 1, wobei zur Erzeugung einer Schweißnaht die Laserstrahlung (7) relativ zu den zu verschweißenden Lagen (1, 2) definiert vorgeschoben wird, **dadurch gekennzeichnet, daß** die Gaszuführung für den Kühl-Gasstrom (13, 13') synchron mit der Eintrittszone (12) der Laserstrahlung (7) vorgeschoben wird.

3. Verfahren nach Anspruch 1 oder 2, **dadurch gekennzeichnet, daß** der Gasstrom (13, 13') durch Druckluft gebildet wird.

4. Verfahren nach Anspruch 1 oder 2, **dadurch gekennzeichnet, daß** der Gasstrom (13, 13') durch ein inertes Gas, insbesondere durch Stickstoff oder Argon, gebildet wird.

5. Verfahren nach einem der Ansprüche 1 bis 4, **dadurch gekennzeichnet, daß** der Gasstrom (13, 13') von der Seite her zur Eintrittszone (12) der Laserstrahlung (7) geführt wird.

6. Verfahren nach einem der Ansprüche 1 bis 4, **dadurch gekennzeichnet, daß** der Gasstrom (13, 13') koaxial zum Laserstrahl (7) herangeführt wird.

7. Verfahren mindestens nach Anspruch 2, wobei eine Schweißnaht entlang einer Randkante (9) der beiden Lagen (1, 2) gelegt wird, **dadurch gekennzeichnet, daß** der Gasstrom (13, 13') von der Außenseite (15) der Randkante (9) her herangeführt wird.

8. Laser-Durchstrahlschweißvorrichtung zur Durchführung des Verfahrens nach einem der Ansprüche 1 bis 7, mit
- einer Werkstückaufnahme (3), und
- einem relativ zur Werkstückaufnahme (3) verschiebbaren Laserschweißkopf (4) mit einer Laserstrahlquelle (7) und einem Fokussieroptik (6), **gekennzeichnet durch**
- eine zur Eintrittszone (12) der Laserstrahlung (7) gerichtete Zuführungsdüse (10, 10') für den Kühl-Gasstrom (13, 13').

9. Laser-Durchstrahlschweißvorrichtung nach Anspruch 8, **dadurch gekennzeichnet, daß** die Zuführungsdüse (10, 10') mit dem Laserschweißkopf (4) gemeinsam verschiebbar gelagert ist.

10. Laser-Durchstrahlschweißvorrichtung nach Anspruch 8 oder 9, **dadurch gekennzeichnet, daß** die Zuführungsdüse (10, 10') von der Seite her an die Eintrittszone (12) herangeführt ist.

11. Laser-Durchstrahlschweißvorrichtung nach Anspruch 8 oder 9, **dadurch gekennzeichnet, daß** die Zuführungsdüse (10, 10') konzentrisch zum Laserstrahl (7) an die Eintrittszone (12) herangeführt ist.

12. Laser-Durchstrahlschweißvorrichtung nach einem der Ansprüche 8 bis 11, **dadurch gekennzeichnet, daß** die Zuführungsdüse (10, 10') mit einer Gasquelle, insbesondere einer Druckluftquelle (5) verbunden ist.
